# EUROPÄISCHE PATENTSCHRIFT

(11) **EP 1 279 452 B1**
(45) Veröffentlichungstag und Bekanntmachung des Hinweises auf die Patenterteilung: **09.11.2005**
(21) Anmeldenummer: 01121889.8
(22) Anmeldetag: 12.09.2001
(51) Int. Cl.: B23B 31/117, F16D 1/06

(54) **Spannbare Klemmbefestigung**
Tensionable clamping fastening
Attache de fixation par serrage tensionable

(30) Priorität: 25.07.2001 EP 01118012
(43) Veröffentlichungstag der Anmeldung: 29.01.2003
(73) Patentinhaber: WENDT GmbH, D-40670 Meerbusch (DE)
(72) Erfinder: Voigt, Klaus, 42857 Remscheid (DE)
(74) Vertreter: DR. STARK & PARTNER

(56) Entgegenhaltungen:
- DE-A- 4 326 262
- DE-A- 19 961 451
- DE-U- 9 216 024

## Beschreibung

Die Erfindung betrifft eine spannbare Klemmbefestigung zwischen einer eine Welle aufweisenden Antriebsspindel einer Werkzeugmaschine und einem umlaufenden Werkzeug mit einer mittig vorgesehenen Bohrung, wobei das Werkzeug auf die Welle aufgesteckt ist und von zumindest einem zum spannbaren Klemmen mit der Welle und dem Werkzeug zusammenwirkenden Befestigungsmittel gehalten ist.

Aus der Praxis sind derartige Klemmbefestigungen bekannt, bei denen ein Werkzeug mit einer dreifach genuteten Werkzeugbohrung auf die Antriebsspindel gesteckt wird. Die Antriebsspindel ist wiederum mit drei entgegen der Antriebsrichtung ansteigenden Keilen versehen, so dass durch Verdrehen des Werkzeugs relativ zur Antriebsspindel drei umfangsmäßig verteilte tragende Zonen zwischen dem Werkzeug und der Antriebsspindel entstehen.

Nachteilig hierbei ist, dass die Zentrierung des Werkzeuges durch die Flanken der Keile erfolgt, wodurch es aufgrund der linienförmigen Auflager zu hohen Flächenpressungen kommt, die Verformungen und Abtrag, insbesondere auch an der Welle verursachen. Somit ist eine langfristig hohe Rundlaufgenauigkeit nicht zu gewährleisten, was jedoch Voraussetzung für die geforderten hohen Bearbeitungsqualitäten ist. Aus entsprechenden Rundlauffehlern resultiert einerseits ein hoher Werkzeugverschleiß, aber andererseits kann es auch bei spröden zu bearbeitenden Materialien, wie z. B. Glas und Keramik, zu Ausbrüchen oder dergleichen kommen.

Auch müssen Bohrung des Werkzeuges und der entsprechende Teilbereich der Welle genau aufeinander abgestimmt sein.

Aus der EP 0 849 042 A1 ist ferner ein Werkzeug bekannt, das auf einer Antriebsspindel mittels einer mittigen, an der Spindelmitte angreifenden Schraubverbindung befestigt wird.

Nachteilig dabei ist, dass auf der Seite des Werkzeugs, welches der Antriebsspindel abgewandt ist, einerseits durch die Mehrteiligkeit des Werkzeugs und der separat hierzu ausgebildeten Halteeinrichtung und andererseits aufgrund der mittigen Schraubbefestigung, die gerade in dem relevanten Bereich eine weitere Eintrittsmöglichkeit darstellt, Kühl- oder Schmiermittel oder Bearbeitungsabfälle wie Späne, Staub oder dergleichen, in den Kontaktbereich von Werkzeug und Antriebsspindel eintreten können und somit Verunreinigungen und/oder Beschädigungen entstehen können. Insoweit kann bei der Verwendung solcher Werkzeuge zum Schleifen von Glas auch der dabei entstehende Glasabrieb, der sich mit dem Kühl-/Schmiermittel zu einem Glasschlamm vermischt, in den sehr wichtigen Bereich der Passung zwischen Werkstück und Antriebsspindel gelangen und dort aushärten. Durch die insoweit erforderliche aufwändige Entfernung der Glasschlammablagerungen kann es zu Beeinträchtigungen der Passung an der Kontaktstelle von Werkzeug und Antriebsspindel kommen, wodurch der Rundlauf des Werkzeugs negativ beeinflusst wird.

Aufgabe der Erfindung ist es, die vorgenannten Nachteile zu vermeiden und eine spannbare Klemmbefestigung zwischen einer eine Welle aufweisenden Antriebsspindel einer Werkzeugmaschine und einem umlaufenden Werkzeug mit einer mittig vorgesehenen Bohrung anzugeben, mit der dauerhaft hohe Bearbeitungsqualitäten erzielbar sind und ein flexibler Einsatz mit unterschiedlichen Werkzeugen bei gleichbleibend hoher Rundlaufgenauigkeit erfolgen kann.

Diese Aufgabe wird gelöst durch eine spannbare Klemmbefestigung zwischen einer eine Welle aufweisenden Antriebsspindel einer Werkzeugmaschine und einem umlaufenden Werkzeug mit einer mittig vorgesehenen Bohrung, wobei das Werkzeug auf die Welle aufgesteckt ist und von zumindest einem zum spannbaren Klemmen mit der Welle und dem Werkzeug zusammenwirkenden Befestigungsmittel gehalten ist, wobei die Klemmbefestigung zum formschlüssigen Zentrieren des Werkzeuges und zur kraftschlüssigen Verbindung von Werkzeug und Welle folgende Merkmale beinhaltet:
- die Welle weist an ihrem freien Ende einen kreiszylinderförmigen und mit der Drehachse der Welle konzentrisch angeordneten Wellenbereich mit einer Umfangsfläche auf,
- der Wellenbereich mit der Umfangsfläche ist gegenüber einem als axiale Anlagefläche ausgebildetem vorspringenden Teilbereich der Welle radial zurückversetzt,
- in der Bohrung des Werkzeuges ist ein Haltekäfig mit um zumindest eine Achse rotationsfähigen Wälzelementen angeordnet,
- und die Wälzelemente sind zum Entlangbewegen auf der Umfangsfläche des Wellenbereichs in axialer Richtung jeweils zumindest um eine orthogonal zum Wellenradius ausgerichtete sowie in einer zur Drehachse der Welle orthogonalen Ebene liegende Rotationsachse drehbar, wobei
- als Befestigungsmittel Schrauben (6) vorgesehen sind, die Durchgangsbohrungen (4) in dem Werkzeug (3) durchfassen und in als Bohrungen (7) mit Innengewinde (8) ausgebildete Befestigungseinrichtungen in den Anlageflächen (10) eingreifen, wobei die Durchgangsbohrungen (4) einen größeren Durchmesser als die Schrauben (6) aufweisen ,
und wobei weiterhin die Bohrung (7) des Werkzeuges (3) auf der dem vorspringenden Teilbereich abgewandten Seite verschlossen ausgebildet ist.

Durch die Ausbildung der Befestigungsmittel als Schrauben, die Durchgangsbohrungen in dem Werkzeug durchfassen, und durch die Ausbildung der Befestigungseinrichtungen als Bohrungen mit Innengewinde ist mit einfachen Mitteln eine Klemmung zwischen Welle und Werkzeug erzielbar und tangentiale Spannungen in den Befestigungsmitteln können aufgrund der größeren Durchgangsbohrung vermieden werden.

Durch die auf der dem vorspringenden Teilbereich abgewandten Seite verschlossene Bohrung des Werkzeuges können Verunreinigungen und/oder Beschädigungen durch Eintritt von Kühl- oder Schmiermittel oder Bearbeitungsabfällen wie Spänen, Staub oder dergleichen sicher vermieden werden.

Dabei ist der Verschluss als integraler Bestandteil des Werkzeuges durch eine Ausbildung der Bohrung als Sackloch gebildet.

Insoweit kann eine formschlüssige Zentrierung ohne aufwändige und hochpräzise Bearbeitung der Bohrung des Werkzeuges erfolgen und im Betrieb bleibt die Genauigkeit der Welle auch bei häufigem Werkzeugwechsel erhalten.

Weiterhin lassen sich durch Verwendung entsprechend unterschiedlicher Haltekäfige mit verschieden großen Wälzelementen auch Werkzeuge mit zu groß dimensionierten Bohrungen auf den Wellendurchmesser anpassen, so dass Werkzeuge mit verschiedenen Bohrungsdurchmessern auf einer Welle oder ein Werkzeug auf Wellen mit unterschiedlichen Durchmessern eingesetzt werden können.

Dabei kann vorteilhafterweise die Umfangsfläche härter als die Wälzelemente sein und/oder die Wälzelemente eine höhere Härte als die Innenseite der Bohrung des Werkzeuges aufweisen, so dass immer nur das weniger wichtige bzw. leichter und häufiger zu wechselnde Bauteil einem Verschleiß unterliegt.

Auch kann die axiale Anlagefläche entweder als kreisringförmige durchgehende Fläche oder aber als mehrere verteilt angeordnete Teilanlageflächen ausgebildet sein.

Vorzugsweise können zwischen den Wälzelementen und der Umfangsfläche des Wellenbereichs und/oder zwischen den Wälzelementen und der Innenfläche der Bohrung eine leichte Spielpassung oder eine leichte Presspassung (z. B. 10 µm Übermaß) vorgesehen sein, so dass eine sehr genaue radiale Ausrichtung, ggf. mit einer geringen statischen Vorspannung, erreicht wird.

Dabei kann der Haltekäfig eng tolerierte kugel-, nadel- oder tonnenförmige Wälzelemente aufweisen, so dass sowohl ein leichtes Aufschieben in axialer Richtung als auch eine genaue Zentrierung möglich ist. Bei kugelförmigen Wälzelementen kann zusätzlich auch noch eine freie Drehung des noch nicht geklemmten Werkzeuges auf der Welle, z. B. zum Ausrichten der Befestigungsmittel oder dergleichen, erfolgen.

Erfindungsgemäß kann die Welle an ihrem freien Ende einen abgeschrägten oder abgerundeten Kantenbereich aufweisen, so dass das Aufsetzen des Werkzeuges auf die Welle besonders einfach durch ein geführtes Zentrieren erfolgen kann.

Hierfür kann auch die Bohrung des Werkzeuges an ihrer der axialen Anlagefläche zugewandten Seite einen abgeschrägten oder abgerundeten Kantenbereich aufweisen.

Ferner kann die Bohrung des Werkzeuges innenseitig einen gegenüber der Umfangsfläche der Welle 10-500 µm größeren und gegenüber der restlichen Bohrung in radialer Richtung vorspringenden Bereich aufweisen, so dass bei Nachgeben der kraftschlüssigen Verbindung die mögliche radiale Verlagerung des Werkzeuges gegenüber der Welle auf ein sehr geringes Maß begrenzt ist, wodurch unkontrollierte Bewegungen vermieden und Verletzungsgefahren sowie Beschädigungen reduziert werden.

Bei einem bevorzugten Ausführungsbeispiel können die Befestigungsmittel und die Befestigungseinrichtungen durch eine in die Antriebsspindel integrierte automatische Spanneinrichtung gebildet sein, so dass eine Klemmbefestigung des Werkzeuges an der Welle automatisch und ohne zusätzliches Werkzeug erzielbar ist.

Vorzugsweise kann das Werkzeug eine Schleifscheibe sein, die insbesondere zur Glasbearbeitung auf ihrer Außenfläche eine umlaufende Nut aufweisen kann.

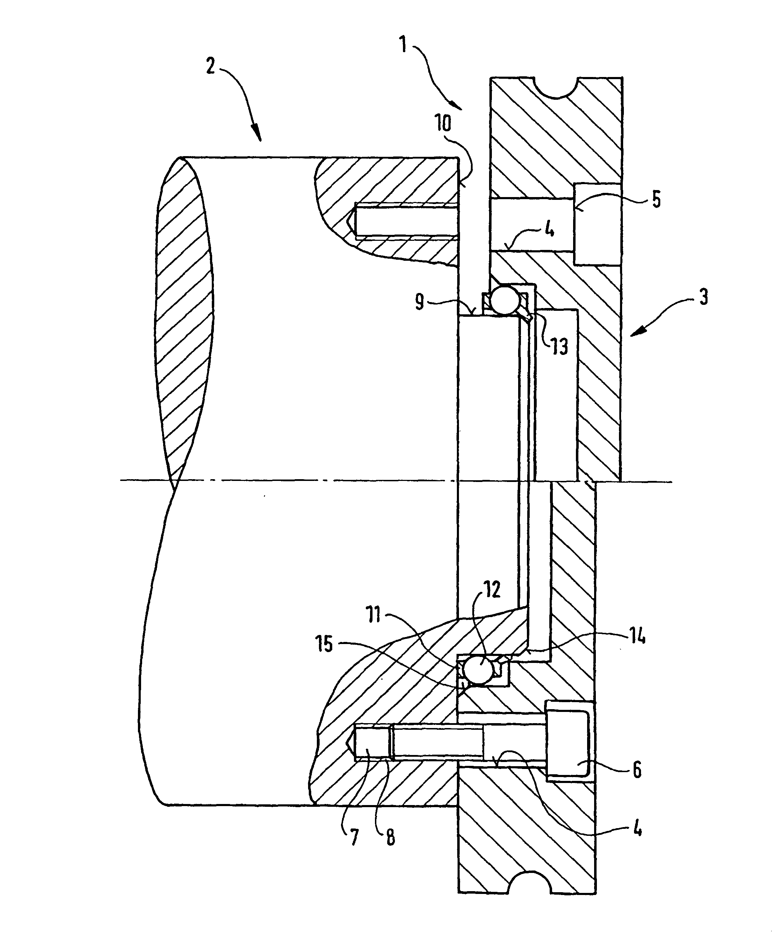

Im Folgenden wird ein in der Zeichnung dargestelltes Ausführungsbeispiel der Erfindung erläutert. Die einzige Figur zeigt eine spannbare Klemmbefestigung 1 zwischen einer Welle 2 und einem Werkzeug 3. Die obere Hälfte der Darstellung zeigt dabei das Werkzeug 3 in halb auf die Welle 2 aufgeschobenem Zustand und die untere Hälfte der Figur zeigt das Werkzeug 3 in fertig montiertem Zustand.

Das Werkzeug 3 weist Durchgangsbohrungen 4 auf, die auf dem der Welle 2 abgewandten Bereich im dargestellten Ausführungsbeispiel einen erweiterten Bereich 5 als axialen Anschlag für Schrauben 6 zur versenkten Montage der Schrauben 6 aufweist. Diese Schrauben 6 durchfassen die Durchgangsbohrung 4 des Werkzeugs 3 und greifen in Bohrungen 7 mit Innengewinde 8 in der Welle 2 ein.

Die Welle 2 weist an ihrem freien Ende einen kreiszylinderförmigen und mit der Drehachse der Welle 2 konzentrisch angeordneten Wellenbereich mit einer Umfangsfläche 9 auf, der gegenüber einem als axiale Anlagefläche 10 ausgebildetem vorspringenden Teilbereich der Welle 2 radial zurückversetzt ist. Dabei sind die Bohrungen 7 in der axialen Anlagefläche 10 angeordnet.

Weiterhin ist als Zentrierelement ein Haltekäfig 11 mit rotationsfähigen Wälzelementen 12 vorgesehen, wobei der Haltekäfig 11 endseitig einen schrägen Vorsprung 13 aufweist, der mit einer umlaufenden Fase 14 am freien Ende der Umfangsfläche 9 korrespondiert.

Zur Montage des Werkzeuges 3 auf der Welle 2 wird der Haltekäfig 11 mit den darin angeordneten Wälzelementen 12 auf die Umfangsfläche 9 aufgesteckt, wobei die Fase 14 das Aufstecken erleichtert und der Vorsprung 13 den Haltekäfig 11 in der aufgesteckten Position hält.

Dann wird das Werkzeug 3 aufgesteckt, wobei eine eingangsseitig vorgesehene Fase 15 die genaue Zentrierung erleichtert. Beim weiteren Aufstecken wird durch Rotation der Wälzelemente 12 der Haltekäfig 11 weiter in Richtung der axialen Anlagefläche 10 verlagert.

In montiertem Zustand liegt der Haltekäfig 11 an der axialen Anlagefläche 10 an und das Werkzeug 3 wird durch Schrauben 6 in seiner festgeklemmten Position gehalten.

## Patentansprüche

1. Spannbare Klemmbefestigung (1) zwischen einer eine Welle (2) aufweisenden Antriebsspindel einer Werkzeugmaschine und einem umlaufenden Werkzeug (3) mit einer mittig vorgesehenen Bohrung (7), wobei das Werkzeug (3) auf die Welle (2) aufgesteckt ist und von zumindest einem zum spannbaren Klemmen mit der Welle (2) und dem Werkzeug (3) zusammenwirkenden Befestigungsmittel gehalten ist, wobei die Klemmbefestigung (1) zum formschlüssigen Zentrieren des Werkzeuges (3) und zur kraftschlüssigen Verbindung von Werkzeug (3) und Welle (2) folgende Merkmale beinhaltet:
- die Welle (2) weist an ihrem freien Ende einen kreiszylinderförmigen und mit der Drehachse der Welle (2) konzentrisch angeordneten Wellenbereich mit einer Umfangsfläche (9) auf,
- der Wellenbereich mit der Umfangsfläche (9) ist gegenüber einem als axiale Anlagefläche (10) ausgebildetem vorspringenden Teilbereich der Welle (2) radial zurückversetzt,
- in der Bohrung (7) des Werkzeuges (3) ist ein Haltekäfig (11) mit um zumindest eine Achse rotationsfähigen Wälzelementen (12) angeordnet,
- und die Wälzelemente (12) sind zum Entlangbewegen auf der Umfangsfläche (9) des Wellenbereichs in axialer Richtung jeweils zumindest um eine orthogonal zum Wellenradius ausgerichtete sowie in einer zur Drehachse der Welle (2) orthogonalen Ebene liegende Rotationsachse drehbar, **dadurch gekennzeichnet, dass**
- als Befestigungsmittel Schrauben (6) vorgesehen sind, die Durchgangsbohrungen (4) in dem Werkzeug (3) durchfassen und in als Bohrungen (7) mit Innengewinde (8) ausgebildete Befestigungseinrichtungen in den Anlageflächen (10) eingreifen, wobei die Durchgangsbohrungen (4) einen größeren Durchmesser als die Schrauben (6) aufweisen,
und wobei weiterhin die Bohrung (7) des Werkzeuges (3) auf der dem vorspringenden Teilbereich abgewandten Seite verschlossen ausgebildet ist.

2. Klemmbefestigung (1) nach Anspruch 1, **dadurch gekennzeichnet, dass** zwischen den Wälzelementen (12) und der Umfangsfläche (9) des Wellenbereichs und/oder zwischen den Wälzelementen (12) und der Innenfläche der Bohrung (7) eine leichte Spielpassung oder eine leichte Presspassung vorgesehen ist.

3. Klemmbefestigung (1) nach Anspruch 1 oder 2, **dadurch gekennzeichnet, dass** der Haltekäfig (11) eng tolerierte kugel-, nadel- oder tonnenförmige Wälzelemente (12) aufweist.

4. Klemmbefestigung (1) nach einem der Ansprüche 1 bis 3, **dadurch gekennzeichnet, dass** die Welle (2) an ihrem freien Ende einen abgeschrägten oder abgerundeten Kantenbereich aufweist.

5. Klemmbefestigung (1) nach einem der Ansprüche 1 bis 4, **dadurch gekennzeichnet, dass** die Bohrung (7) des Werkzeuges (3) an ihrer der axialen Anlagefläche (10) zugewandten Seite einen abgeschrägten oder abgerundeten Kantenbereich aufweist.

6. Klemmbefestigung (1) nach einem der Ansprüche 1 bis 5, **dadurch gekennzeichnet, dass** die Bohrung (7) des Werkzeuges (3) innenseitig einen gegenüber der Umfangsfläche (9) der Welle (2) 10-500 µm größeren und gegenüber der restlichen Bohrung (7) in radialer Richtung vorspringenden Bereich aufweist.

7. Klemmbefestigung (1) nach einem der Ansprüche 1 bis 6, **dadurch gekennzeichnet, dass** die Befestigungsmittel und die Befestigungseinrichtungen durch eine in die Antriebsspindel integrierte automatische Spanneinrichtung gebildet sind.

## Claims

1. Tensionable clamp fitting (1) between a drive spindle, which has a shaft (2), of a machine tool and a circulating tool (3) provided with a central bore (7), the tool (3) being pushed onto the shaft (2) and being held by at least one fastening means cooperating with the shaft (2) and the tool (3) to clamp in a tensionable manner, the clamp fitting (1) having the following features for centring the tool (3) in a positive fit and for connecting the tool (3) and shaft (2) in a force-locking manner:
- the shaft (2) has at its free end a circular-cylindrical shaft region arranged concentric with the rotational axis of the shaft (2) and having a circumferential surface (9),
- the shaft region with the circumferential surface (9) is set back radially from a projecting partial region of the shaft (2) configured as an axial bearing surface (10),
- in the bore (7) of the tool (3) is arranged a holding cage (11) having roller elements (12) capable of rotating about at least one axis,
- and, for moving along the circumferential surface (9) of the shaft region in an axial direction, the roller elements (12) are rotatable respectively at least about an axis of rotation aligned orthogonal to the shaft radius and lying in a plane orthogonal to the rotational axis of the shaft (2),
**characterised in that**
- as fastening means, screws (6) are provided which grip in through bores (4) in the tool (3) and engage in fastening devices, in the form of bores (7) having an internal thread (8), in the bearing surfaces (10), the through bores (4) having a larger diameter than the screws (6),
and furthermore the bore (7) in the tool (3) being formed closed on the side remote from the projecting partial region.

2. Clamp fitting (1) according to claim 1, **characterised in that** an easy loose fit or an easy press fit is provided between the roller elements (12) and the circumferential surface (9) of the shaft region and/or between the roller elements (12) and the inner surface of the bore (7).

3. Clamp fitting (1) according to claim 1 or 2, **characterised in that** the holding cage (11) has spherical, needle-shaped or barrel-shaped roller elements (12) with close tolerances.

4. Clamp fitting (1) according to one of claims 1 to 3, **characterised in that** the shaft (2) has a bevelled or rounded edge region at its free end.

5. Clamp fitting (1) according to one of claims 1 to 4, **characterised in that** the bore (7) of the tool (3) has a bevelled or rounded edge region on its side facing the axial bearing surface (10).

6. Clamp fitting (1) according to one of claims 1 to 5, **characterised in that** the bore (7) of the tool (3) has on its inside a region which projects in a radial direction relative to the rest of the bore (7) and is 10-500µm larger than the circumferential surface (9) of the shaft (2).

7. Clamp fitting (1) according to one of claims 1 to 6, **characterised in that** the fastening means and the fastening devices are formed by an automatic tensioning device integrated in the drive spindle.

## Revendications

1. Attache de fixation (1) par serrage tensionnable entre une broche d'entraînement d'une machine-outil, munie d'un arbre (2), et un outil rotatif (3) au centre duquel un perçage (7) est prévu, l'outil (3) étant emboîté sur l'arbre (2), et étant retenu par au moins un moyen de fixation coopérant avec l'arbre (2) et l'outil (3), en vue du serrage tensionnable, l'attache de fixation (1) comprenant, en vue du centrage de l'outil (3) par concordance de formes et en vue de la liaison mécanique de l'outil (3) et de l'arbre (2), les caractéristiques énoncées ci-après :
- l'arbre (2) possède, à son extrémité libre, une région cylindrique droite agencée concentriquement à l'axe de rotation dudit arbre (2), et munie d'une surface périphérique (9),
- la région de l'arbre dotée de la surface périphérique (9) est radialement en retrait vis-à-vis d'une région partielle débordante dudit arbre (2) réalisée sous la forme d'une surface axiale de contact (10),
- le perçage (7) de l'outil (3) loge une cage de retenue (11) équipée d'éléments de roulement (12) aptes à tourner autour d'au moins un axe,
- et, en vue d'un mouvement le long de la surface périphérique (9) de ladite région de l'arbre, dans la direction axiale, les éléments de roulement (12) peuvent respectivement tourner au moins autour d'un axe de rotation orienté orthogonalement vis-à-vis du rayon de l'arbre, et situé dans un plan orthogonal vis-à-vis de l'axe de rotation dudit arbre (2), **caractérisée par le fait que**
- des vis (6), prévues en tant que moyen de fixation, franchissent les perçages traversants (4) pratiqués dans l'outil (3) et pénètrent dans des systèmes de fixation réalisés, dans les surfaces de contact (10), en tant que perçages (7) à filetage intérieur (8), les perçages traversants (4) présentant un plus grand diamètre que les vis (6),
et le perçage (7) de l'outil (3) est, par ailleurs, de réalisation fermée du côté tourné à l'opposé de la région partielle débordante.

2. Attache de fixation (1) par serrage tensionnable selon la revendication 1, **caractérisée par le fait qu'**un ajustement avec jeu sensible ou un ajustement légèrement serré est prévu entre les éléments de roulement (12) et la surface périphérique (9) de la région de l'arbre, et/ou entre lesdits éléments de roulement (12) et la surface intérieure du perçage (7).

3. Attache de fixation (1) par serrage tensionnable selon la revendication 1 ou 2, **caractérisée par le fait que** la cage de retenue (11) comporte des éléments de roulement (12) à tolérances serrées, configurés en des billes, des aiguilles ou des tonneaux.

4. Attache de fixation (1) par serrage tensionnable selon l'une des revendications 1 à 3, **caractérisée par le fait que** l'arbre (2) présente, à son extrémité libre, une région marginale biseautée ou arrondie.

5. Attache de fixation (1) par serrage tensionnable selon l'une des revendications 1 à 4, **caractérisée par le fait que** le perçage (7) de l'outil (3) comporte, sur son côté tourné vers la surface axiale de contact (10), une région marginale biseautée ou arrondie.

6. Attache de fixation (1) par serrage tensionnable selon l'une des revendications 1 à 5, **caractérisée par le fait que** le perçage (7) de l'outil (3) possède, intérieurement, une région qui excède 10-500 µm par rapport à la surface périphérique (9) de l'arbre (2) et fait saillie, dans le sens radial, vis-à-vis du reste dudit perçage (7).

7. Attache de fixation (1) par serrage tensionnable selon l'une des revendications 1 à 6, **caractérisée par le fait que** les moyens de fixation et les systèmes de fixation sont matérialisés par un système de serrage automatique intégré dans la broche d'entraînement.
